# EUROPÄISCHE PATENTANMELDUNG

(11) **EP 2 458 421 A1**
(43) Veröffentlichungstag der Anmeldung: **30.05.2012**
(21) Anmeldenummer: 11190906.5
(22) Anmeldetag: 28.11.2011
(51) Int. Cl.: G02B 21/24

(54) **Einrichtung zum Fokussieren eines Mikroskopobjektivs auf eine Probe**

(30) Priorität: 26.11.2010 DE 102010060841
(71) Anmelder: Leica Microsystems CMS GmbH, 35578 Wetzlar (DE)
(72) Erfinder: Ganser, Michael, 35398 Gießen (DE)
(74) Vertreter: Schaumburg, Thoenes, Thurn, Landskron, Eckert

(57) **Zusammenfassung**

Beschrieben ist eine Einrichtung zum Fokussieren eines Mikroskopobjektivs (26) auf eine Probe (18). Die Einrichtung umfasst eine Positioniereinheit (20) mit einem Grundkörper (22), einem an dem Grundkörper beweglich gelagerten Objektivhalter (24) zum Halten des Mikroskopobjektivs (26) und einem Aktor (27) zum Bewegen des Objektivhalters (24) längs der optischen Achse (O) des Mikroskopobjektivs. Der Objektivhalter hält einen der Probe (18) zugewandten Frontabschnitt des Mikroskopobjektivs (26).

## Beschreibung

Die Erfindung betrifft eine Einrichtung zum Fokussieren eines Mikroskopobjektivs auf eine Probe, umfassend eine Positioniereinheit mit einem Grundkörper, einem an dem Grundkörper beweglich gelagerten Objektivhalter zum Halten des Mikroskopobjektivs und einem Aktor zum Bewegen des Objektivhalters längs der optischen Achse des Mikroskopobjektivs.

In der hochauflösenden Lichtmikroskopie ist eine stabile und positionsgenaue Halterung des Mikroskopobjektivs in dem Abbildungsstrahlengang besonders wichtig. So sollen in modernen lichtmikroskopischen Verfahren räumliche Auflösungen erzielt werden, die lateral, d.h. quer zur optischen Achse des Mikroskopobjektivs, kleiner als 50 nm sind. Unbeabsichtigte laterale Relativbewegungen zwischen Probe und Mikroskopobjektiv beispielsweise in Folge von Temperaturschwankungen sind deshalb weitestgehend zu vermeiden. Dies gilt umso mehr, als in einigen Verfahren lange Aufnahmezeiten von mehreren Minuten vorgesehen sind, in denen auch kleinste Verschiebungen des Mikroskopobjektivs quer zur optischen Achse in ihrer Summe zu einem Bildversatz und damit zu einer entsprechenden Verringerung der lateralen Auflösung führen würden.

Auch muss bei den lichtmikroskopischen Verfahren vorstehend genannter Art eine besonders präzise Fokussierung des Mikroskopobjektivs auf die Probe gewährleistet sein. Dabei liegt die Länge des Stellweges des Mikroskopobjektivs längs der optischen Achse typischerweise in einem Bereich von etwa 100 µm. Als Positioniereinheiten, die in dem Mikroskop die fokussierende Bewegung des Mikroskopobjektivs längs der optischen Achse bewirken, kommen zunehmend auch hochpräzise Mikrosysteme zur Anwendung, die einen Grundkörper, einen an dem Grundkörper beweglich gelagerten Objektivhalter sowie einen (beispielsweise piezokeramischen) Aktor umfassen, der den Objektivhalter und damit das Mikroskopobjektiv präzise längs der optischen Achse bewegt, um das Mikroskopobjektiv auf die Probe zu fokussieren.

Ein herkömmliches Mikroskopobjektiv weist an seinem hinteren, d.h. dem von der Probe abgewandte Ende üblicherweise ein Objektivgewinde auf, das z.B. dazu dient, das Mikroskopobjektiv in einen handelsüblichen Objektivrevolver zu schrauben. Dieses Mikroskopgewinde wird nun bei Verwendung einer Positioniereinheit vorstehend genannter Art dazu genutzt, das Mikroskopobjektiv gegebenenfalls unter Zwischenschaltung eines passenden Adapters mit seinem hinteren Ende in den Objektivhalter zu schrauben.

Aus dem Stand der Technik sind weitere Lösungen bekannt, die darauf abzielen, für eine möglichst stabile Halterung und hochpräzise Fokussierung des Mikroskopobjektivs zu sorgen. So ist in der US 2002/0015225 ein Mikroskop beschrieben, bei dem die Probenhalterung und die Fokussiereinheit direkt auf das Mikroskopobjektiv aufgesetzt sind. Dies hat jedoch den Nachteil, dass ein einfacher Wechsel des Mikroskopobjektivs nicht mehr möglich ist. Auch wirkt sich eine Manipulation an der Probe direkt auf die Fokussiereinheit aus, wodurch die Fokussiergenauigkeit beeinträchtigt werden kann.

In der EP 1 418 456 A1 ist ein Mikroskop offenbart, bei dem unerwünschte Positionsabweichungen des Mikroskopobjektivs quer zur optischen Achse durch einen um die optische Achse rotationssymmetrischen Aufbau und durch die Verwendung optischer Komponenten, deren thermische Ausdehnungskoeffizienten geeignet aufeinander abgestimmt sind, vermieden werden sollen.

In der WO 2006/056178 A1 ist ein Mikroskopobjektiv offenbart, das über eine Führungshülse in einen Probentisch eingebaut ist. Dadurch wird zwar die Stabilität längs der optischen Achse erhöht, jedoch weist das Mikroskopobjektiv in der Führungshülse ein nicht vernachlässigbares mechanisches Spiel quer zur optischen Achse auf.

In der US 6 731 327 B1 ist eine Positioniereinheit zum Verschieben eines Mikroskopobjektivs längs der optischen Achse beschrieben. Diese Positioniereinheit weist eine Klemmvorrichtung auf, die das Mikroskopobjektiv in der Arbeitsstellung zusätzlich stabilisiert. Durch das Vorsehen der Klemmvorrichtung ist dieser Aufbau jedoch vergleichsweise aufwendig.

In der DE 199 49 044 A1 ist eine Vorrichtung zur Feinpositionierung eines Mikroskopobjektivs unter Verwendung einer Doppelparallelfeder bekannt. Dabei greift die Doppelparallelfeder an dem von der Probe abgewandten Ende des Mikroskopobjektivs an, wodurch es zu nicht vernachlässigbaren Verkippungen des entgegengesetzten, der Probe zugewandten freien Endes des Mikroskopobjektivs kommen kann, die sich in einem unerwünschten Bildversatz und damit in einer entsprechenden Verschlechterung der räumlichen Auflösung bemerkbar machen.

Aus der US 2009/0284853 A1 ist eine Fokussiereinrichtung bekannt, die zwei Blattfedern umfasst, die jeweils mit einem Ende an einen Grundkörper und mit dem anderen Ende an einen Objektivhalter gekoppelt sind. Der Objektivhalter ist aus einem an der Außenfläche des Objektivtubus angeordneten Außengewinde und einer mit dem Außengewinde in Eingriff stehenden Mutter gebildet.

In der US 2010/0091363 A1 ist eine Objektivhalterung beschrieben, mit der eines von mehreren Objektiven wahlweise in den Mikroskopstrahlengang eingebracht werden kann. Die verschiedenen Objektive haben jeweils eine längs der optischen Achse auf gleicher Höhe angeordnete Anlagefläche, die mit einer korrespondierenden, feststehenden Anlagefläche in Kontakt kommt, so dass für Parfokalität zwischen den verschiedenen Objektiven gesorgt ist.

Aufgabe der Erfindung ist es, eine Einrichtung anzugeben, die eine präzise Fokussierung eines Mikroskopobjektivs auf eine Probe mit möglichst hoher räumlicher Auflösung ermöglicht.

Die Erfindung löst diese Aufgabe durch den Gegenstand des Anspruchs 1.

Die Erfindung sieht also in Abkehr von herkömmlichen Systemen, in denen das Mikroskopobjektiv an dem hinteren, d.h. dem von der Probe abgewandten Ende (üblicherweise über das dort vorhandene Objektivgewinde) gehalten ist, eine Halterung an einem vorderen, d.h. einem der Probe zugewandten Frontabschnitt vor, in dem sich die sogenannte Frontlinse befindet. Es hat sich nämlich herausgestellt, dass die erfindungsgemäße Stabilisierung am vorderen Objektivende im Hinblick auf die Erzielung einer möglichst hohen lateralen Auflösung Vorteile gegenüber der herkömmlichen Stabilisierung am hinteren Objektivende hat.

So gibt es in einem Mikroskopobjektiv stets eine quer zur optischen Achse liegende, verkippungstolerante Ebene, in der eine Verkippung des Mikroskopobjektivs quer zur optischen Achse zumindest in erster Näherung nicht zu einem Bildversatz führt. Diese Ebene stimmt mit der ersten Hauptebene der Objektivoptik überein. Die genaue Lage der Ebene hängt von der konkreten Ausgestaltung des Mikroskopobjektivs ab, insbesondere von der speziellen Anordnung und der Anzahl der in dem Objektiv vorhandenen Linsen. Jedoch lässt sich für ein in der hochauflösenden Lichtmikroskopie verwendetes, stark vergrößerndes Mikroskopobjektiv, das bei einer Gesamtlänge von einigen zehn mm (typisch sind ca. 45 bis 65 mm Baulänge) eine Brennweite von nur wenigen mm aufweist, in jedem Fall feststellen, dass die verkippungstolerante Ebene im probenzugewandten Frontabschnitt des Objektivs liegt. Dieser Frontabschnitt weist - von der Probe aus gesehen - als erste der Probe zugewandte Linse die vorstehend genannte Frontlinse auf. In der praktischen Umsetzung der Erfindung wird es deshalb zur Erzielung einer signifikanten Verbesserung der lateralen Auflösung in jedem Fall ausreichend sein, den Objektivhalter so weit vorne an dem Mikroskopobjektiv angreifen zu lassen, wie dies unter den gegebenen Umständen überhaupt möglich ist.

Die Positioniereinheit weist einen oder mehrere Hebelarme auf, die jeweils an ihrem einen Ende über ein erstes elastisches Festkörpergelenk mit dem Grundkörper und an ihrem anderen Ende über ein zweites elastisches Festkörpergelenk mit dem Objektivhalter gekoppelt sind. In dieser Ausgestaltung bildet die Positioniereinheit ein einstückiges Bauteil, dessen durch den Grundkörper und den Objektivhalter gegebene Starrkörperbereiche über elastische Festkörpergelenke relativ zueinander bewegbar sind. Dabei sind die Festkörpergelenke jeweils durch einen Bereich des Bauteils gegeben, der in Richtung der optischen Achse eine Biegesteifigkeit aufweist, die gegenüber der Biegesteifigkeit angrenzender Bereiche vermindert ist. Diese verminderte Biegesteifigkeit kann beispielsweise durch eine lokale Querschnittsverringerung des das Bauteil bildenden Materials erzielt werden.

In einer weiteren vorteilhaften Ausgestaltung sind zwei parallel zueinander angeordnete Hebelarme vorgesehen, die mit dem Grundkörper und dem Objektivhalter eine Parallelogrammanordnung bilden. Eine solche Parallelogrammanordnung ermöglicht eine präzise Stellbewegung des Objektivhalters längs der optischen Achse mit einer nur sehr geringen, unbeabsichtigten Bewegung quer zur optischen Achse. Hierzu ist der Aktor vorgesehen, der eine Kraft auf die Hebelarme ausübt und somit eine gezielte Bewegung der Parallelogrammanordnung bewirkt.

Der Grundkörper der Positioniereinheit ist an einem Tisch angebracht, auf dem die Probe angeordnet ist. Dadurch ist der der Probe zugewandte Frontabschnitt des Mikroskopobjektivs über die Positioniereinheit mit der an dem Tisch angebrachten Probe gekoppelt. Die Kopplungsstrecke zwischen Mikroskopobjektiv und Probe ist deshalb vorteilhaft kurz, so dass übermäßige Relativbewegungen zwischen Mikroskopobjektiv und Probe, insbesondere infolge von Temperaturänderungen, vermieden werden.

In einer weiteren vorteilhaften Ausgestaltung ist der Aktor ein piezokeramisches Element, das in den Grundkörper der Positioniereinheit integriert ist. Ein solches piezokeramisches Element ist imstande, den Objektivhalter sehr präzise längs der optischen Achse zu bewegen.

Vorzugsweise weist der Objektivhalter einen Ring mit einem Innengewinde und das Mikroskopobjektiv an seinem der Probe zugewandten Frontabschnitt ein Außengewinde auf, auf welches das Innengewinde des Rings geschraubt ist. Durch diese um die optische Achse rotationssymmetrische Halterung des Mikroskopobjektivs werden Verschiebungen quer zur optischen Achse weiter verringert.

Gemäß einem weiteren Aspekt der Erfindung ist ein Mikroskop mit einer Einrichtung zum Fokussieren eines Mikroskopobjektivs nach Anspruch 6 vorgesehen.

Die Erfindung wird im Folgenden anhand eines Ausführungsbeispiels näher beschrieben.

Die einzige Figur zeigt ein hochauflösendes Lichtmikroskop, das ein Ausführungsbeispiel der Erfindung darstellt.

Das in der Figur mit 10 bezeichnete Lichtmikroskop umfasst ein inverses Stativ 12, auf das ein Tisch 14 aufgesetzt ist, der eine Durchgangsöffnung 16 aufweist. Auf dem Tisch 14 ist eine Probe 18 so angebracht, dass sie die Durchgangsöffnung 16 bedeckt. An der Unterseite des Tisches 14 ist eine Positioniereinheit 20 angebracht.

Die Positioniereinheit 20 weist einen Grundkörper 22 und einen an dem Grundkörper 22 beweglich gelagerten Objektivhalter 24 auf. An dem Objektivhalter 24 ist ein Mikroskopobjektiv 26 gehalten. Der Objektivhalter 24 kann mittels eines in den Grundkörper 22 integrierten, piezokeramischen Aktors 27, in der Figur nur schematisch gezeigt, längs einer optischen Achse O bewegt werden, um das Objektiv 26 zur Fokussierung auf die Probe 18 längs der optischen Achse O zu verstellen. Der Aktor 27 ist mit einer Steuereinheit 29 verbunden. Mit deren Steuersignal werden die Bewegungen des Aktors 27 erzeugt, durch die dann der Objektivhalter 24 bewegt wird. Die Steuereinheit 29 ist in dem vorliegenden Ausführungsbeispiel außerhalb des Stativs 12 angeordnet. Sie kann jedoch auch in das Stativ 12 integriert sein.

Im Folgenden wird zunächst die Positioniereinheit 20 im Detail beschrieben.

Der Objektivhalter 24 ist über Hebelarme 28 und 30 beweglich an dem Grundkörper 22 gelagert. In dem vorliegenden Ausführungsbeispiel ist die Positioniereinheit 20 ein einstückiges Bauteil, dessen gegeneinander bewegbare Komponenten, nämlich der Grundkörper 22, der Objektivhalter 24 sowie die Hebelarme 28 und 30 durch Materialaussparungen 32 gegeneinander abgegrenzt sind. Die Materialaussparungen 32 sind in der Positioniereinheit 20 derart ausgebildet, dass im Bereich der Längsenden der Hebelarme 28 und 30 in dem die Positioniereinheit 20 bildenden Material lokale Querschnittsverringerungen vorhanden sind, die elastische Festkörpergelenke definieren. In der Figur ist der Übersichtlichkeit halber nur eines der Festkörpergelenke mit dem Bezugszeichen 34 bezeichnet.

Die Festkörpergelenke 34 haben infolge der vorstehend genannten lokalen Querschnittsverringerung in einer Richtung parallel zur optischen Achse O eine Biegesteifigkeit, die gegenüber der Biegesteifigkeit quer zur optischen Achse O deutlich verringert ist. Durch diese verringerte Biegesteifigkeit ermöglichen es die Festkörpergelenke 34, den Objektivhalter 24 über die Hebelarme 28 und 30 relativ zu dem Grundkörper 22 längs der optischen Achse O zu bewegen. Der Objektivhalter 24, der Grundkörper 22 und die beiden Hebelarme 28 und 30 bilden demnach eine Anordnung nach Art eines Parallelogramms. Dabei ist die feststehende Basis des Parallelogramms durch den Grundkörper 22 gegeben, während die drei übrigen beweglichen Seiten des Parallelogramms durch den Objektivhalter 24 und die beiden Hebelarme 28 und 30 gebildet sind.

In diesem Zusammenhang ist darauf hinzuweisen, dass die Größe der Stellbewegung des Objektivhalters 24 längs der optischen Achse O maximal bei etwa 100 µm liegt. Bei dieser sehr geringen Stellbewegung ist die durch die vorstehend erläuterte Parallelogrammanordnung bewirkte, unbeabsichtigte Bewegung des Objektivhalters 24 quer zur optischen Achse O vernachlässigbar gering.

Der Objektivhalter 24 ist aus einem parallel zur optischen Achse O verlaufenden, länglichen Abschnitt 40 und einen Ring 42 gebildet, der von dem länglichen Abschnitt 40 quer zur optischen Achse O absteht. Der Ring 42 weist ein rotationssymmetrisch zur optischen Achse O angeordnetes Innengewinde 44 auf. Dieses Innengewinde 44 ist mit einem Außengewinde 46 verschraubt, das an einem Ringteil 48 des Mikroskopobjektivs 26 ausgebildet ist. Der Ringteil 48 befindet sich an einem der Probe 18 zugewandten Frontabschnitt des Mikroskopobjektivs 26. Demnach ist das Mikroskopobjektiv 26 an seinem Frontabschnitt mit der Positioniereinheit 20 gekoppelt.

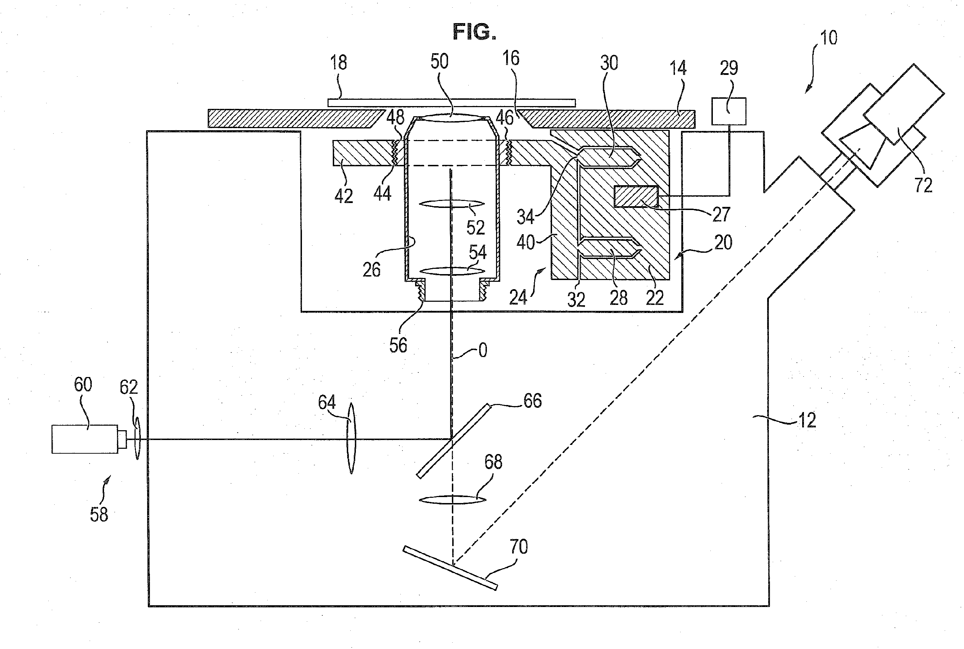

Im vorliegenden Ausführungsbeispiel ist das Mikroskopobjektiv 26 also an einer Stelle gehalten, die sich unmittelbarer Nähe derjenigen Objektivlinse befindet, die der Probe 18 unmittelbar zugewandt ist. In Figur 1 ist diese auch als Frontlinse bezeichnete Linse mit dem Bezugszeichen 50 versehen. Das Mikroskopobjektiv 26 enthält selbstredend weitere Linsen, die in Figur 1 rein schematisch durch die Bezugszeichen 52 und 54 angedeutet sind.

Wie ein herkömmliches Objektiv auch hat das Mikroskopobjektiv 26 an seinem hinteren, d.h. seinem von der Probe 18 abgewandten Ende ein Objektivgewinde 56. Das Objektivgewinde 56 wird beispielsweise im Fertigungsprozess zur Justage genutzt.

Das Lichtmikroskop 10 weist ferner eine Beleuchtungsvorrichtung 58 auf, die aus einer Lichtquelle 60 sowie Linsen 62 und 64 gebildet. Das von der Lichtquelle 60 ausgegebene fluoreszenzanregende Licht tritt durch die Linsen 62 und 64 und wird an einem dichroitischen Spiegel 66 längs der optischen Achse O in das Objektiv 26 reflektiert. Das von der Probe 18 ausgehende Fluoreszenzlicht fällt durch die Fronlinse 50 und die weiteren Linsen 52 und 54 des Mikroskopobjektivs 26 auf den halbdurchlässigen Spiegel 66 und wird von diesem in Richtung einer weiteren Linse 68 durchgelassen. Das durch die Linse 68 tretende Fluoreszenzlicht wird schließlich an einem Spiegel 70 in eine an dem Stativ 12 angebrachte Kamera 72 reflektiert.

Es versteht sich von selbst, dass die vorstehend beschriebene Ausführungsform lediglich beispielhaft zu verstehen ist. Es kann beispielsweise auch eine andere Positioniereinheit als die einstückig ausgebildete und mit den Festkörpergelenken 34 versehene Einheit 20 verwendet werden. Beispielsweise kann auch eine Federanordnung zum Einsatz kommen, die über einen externen Aktor angetrieben wird, um das Mikroskopobjektiv 26 längs der optischen O zu bewegen und damit zu fokussieren.

Auch kann der Objektivhalter 24 in anderer Weise mit dem Mikroskopobjektiv 26 gekoppelt werden, als dies in Figur 1 mit den ineinander greifenden Gewinden 44 und 46 gezeigt ist. Erfindungswesentlich ist jedoch, dass das Mikroskopobjektiv 26 an seinem der Probe 18 zugewandten Frontabschnitt gehalten ist.

### Bezugszeichenliste

- 10: Lichtmikroskop
- 12: Stativ
- 14: Tisch
- 16: Durchgangsöffnung
- 18: Probe
- 20: Positioniereinheit
- 22: Grundkörper
- 24: Objektivhalter
- 26: Mikroskopobjektiv
- 27: Aktor
- 28: Hebelarm
- 29: Steuereinheit
- 30: Hebelarm
- 32: Materialaussparung
- 34: Festkörpergelenk
- 40: länglicher Abschnitt
- 42: Ring
- 44: Innengewinde
- 46: Außengewinde
- 48: Ringteil
- 50: Frontlinse
- 52: Linse
- 54: Linse
- 56: Objektivgewinde
- 58: Beleuchtungsvorrichtung
- 60: Lichtquelle
- 62: Linse
- 64: Linse
- 66: Dichroitischer Spiegel
- 68: Linse
- 70: Spiegel
- 72: Kammer

## Patentansprüche

1. Einrichtung zum Fokussieren eines Mikroskopobjektivs (26) auf eine Probe (18), umfassend:
eine Positioniereinheit (20) mit einem Grundkörper (22), einem an dem Grundkörper (22) beweglich gelagerten Objektivhalter (24) zum Halten des Mikroskopobjektivs (26) und einem Aktor (27) zum Bewegen des Objektivhalters (24) längs der optischen Achse (O) des Mikroskopobjektivs (26),
**dadurch gekennzeichnet, dass** der Objektivhalter (24) das Mikroskopobjektiv (26) nur an einem der Probe (18) zugewandten Frontabschnitt des Mikroskopobjektivs (26) hält,
dass die Positioniereinheit (20) einen oder mehrere Hebelarme (28, 30) umfasst, die jeweils an ihrem einen Ende über ein erstes elastisches Festkörpergelenk (34) mit dem Grundkörper (22) und an ihrem anderen Ende über ein zweites elastisches Festkörpergelenk (34) mit dem Objektivhalter (24) gekoppelt sind, und
dass der Grundkörper (22) der Positioniereinheit (20) an einem Tisch (14) angebracht ist, auf dem die Probe (18) angeordnet ist.

2. Einrichtung nach Anspruch 1, **gekennzeichnet durch** zwei parallel zueinander angeordnete Hebelarme (28, 30), die mit dem Grundkörper (22) und dem Objektivhalter (24) eine Parallelogrammanordnung bilden.

3. Einrichtung nach einem der vorhergehenden Ansprüche, **dadurch gekennzeichnet, dass** der Aktor ein piezokeramisches Element ist, das in den Grundkörper (22) der Positioniereinheit (20) integriert ist.

4. Einrichtung nach einem der vorhergehenden Ansprüche, **dadurch gekennzeichnet, dass** der Objektivhalter (24) einen Ring (42) mit einem Innengewinde (44) und das Mikroskopobjektiv (26) an seinem der Probe zugewandten Frontabschnitt ein Außengewinde (46) aufweist, auf welches das Innengewinde (44) des Rings (42) geschraubt ist.

5. Einrichtung nach einem der vorhergehenden Ansprüche, **dadurch gekennzeichnet, dass** die Gesamtlänge des Mikroskopobjektivs (26) längs der optischen Achse (O) in einem Bereich von 45 bis 65 mm liegt, dass die Länge des der Probe (18) zugewandten Frontabschnitts, an dem das Mikroskopobjektiv (26) gehalten ist, längs der optischen Achse (O) in einem Bereich von 2 bis 10 mm liegt, und dass die Brennweite des Mikroskopobjektivs (26) in einem Bereich von 2 bis 4 mm liegt.

6. Mikroskop (10) mit einer Einrichtung zum Fokussieren eines Mikroskopobjektivs (26) auf eine Probe (18) nach einem der vorhergehenden Ansprüche.
